# FASCICULE DE BREVET EUROPEEN

(11) **EP 4 389 061 B1**
(45) Date de publication et mention de la délivrance du brevet: **26.11.2025**
(21) Numéro de dépôt: 23218343.4
(22) Date de dépôt: 19.12.2023
(51) Int. Cl.: A61C 7/08, A61C 7/20

(54) **GOUTTIERE ORTHODONTIQUE ET SON PROCÉDÉ DE FABRICATION**
ORTHODONTISCHE SCHIENE UND IHRE HERSTELLUNGSMETHODE
ORTHODONTIC SPLINT AND THE FABRICATION METHOD OF THE SAME

(30) Priorité: 21.12.2022 FR 2214084
(43) Date de publication de la demande: 26.06.2024
(73) Titulaire: Gualano, Christophe, 81000 Albi (FR); Paradis, Laurence, 81000 Albi (FR)
(72) Inventeur: GUALANO, Christophe, 81000 ALBI (FR)
(74) Mandataire: Plasseraud IP

(56) Documents cités:
- US-A1- 2002 192 617
- US-A1- 2010 086 890
- US-A1- 2017 319 296

## Description

### Domaine technique

La présente divulgation concerne le domaine des dispositifs de correction du positionnement dentaire et plus particulièrement le domaine des gouttières orthodontiques.

### Technique antérieure

En orthodontie, des gouttières orthodontiques sont utilisées pour corriger le positionnement des dents. Les documents US 2017/0319296 A1 et US 9,820,829 B2 présentent des dispositifs en lien avec l'orthodontie. US 2002/192617 A1 est aussi un document lié à l'orthodontie.

Une gouttière orthodontique est un appareil orthodontique réalisé sur mesure pour épouser la forme des dents de la mâchoire supérieure (maxillaire) et/ou inférieure (mandibule) d'un patient afin d'exercer des forces sur les dents de cette mâchoire de manière à appliquer une correction du positionnement des dents.

Un traitement de correction du positionnement des dents entre une position initiale et une position finale comprend l'utilisation d'un ensemble de gouttières orthodontiques qu'un patient s'applique à porter environ deux semaines par gouttière.

La modélisation d'un ensemble de gouttières est effectuée par ordinateur à partir d'une empreinte dentaire du patient définissant la position initiale des dents du patient et à partir d'une position finale des dents définie par le praticien orthodontiste.

La modélisation par ordinateur définit ainsi une première gouttière adaptée pour corriger le positionnement des dents de la position initiale vers une première position intermédiaire, une deuxième gouttière adaptée pour corriger le positionnement des dents de la première position intermédiaire à une deuxième position intermédiaire, etc. jusqu'à une dernière gouttière qui devrait permettre de corriger le positionnement des dents d'une énième position intermédiaire à la position finale définie par le praticien orthodontiste.

Les fichiers modélisés par ordinateur sont ensuite utilisés pour fabriquer les gouttières que le patient pourra porter pour corriger le positionnement de ses dents. Un traitement correctif optimal nécessite donc que les dents se déplacent exactement comme calculé par l'ordinateur pour déterminer l'ensemble des gouttières permettant de passer de la position initiale des dents du patient à la position finale définie par le praticien orthodontiste.

En pratique, la correction des dents appliquée entre deux gouttières successives n'est pas toujours exactement correspondante à celle calculée par l'ordinateur.

Par ailleurs, un traitement correctif utilisant un ensemble de gouttières comprend un nombre relativement important de gouttières dans la mesure où la correction appliquée par chaque gouttière sur le positionnement des dents est limitée. Du nombre de gouttières dépend directement le temps de traitement du patient de sorte que la longueur d'un traitement pour un patient peut être élevée.

La présente divulgation vient améliorer ces situations.

### Résumé

Il est ainsi proposé un dispositif de correction du positionnement des dents du maxillaire ou de la mandibule d'un individu comprenant une gouttière orthodontique, la gouttière comprenant une cavité ouverte délimitée par un bord, et formée par une pluralité d'alvéoles dentaires individuelles dont la forme est adaptée à celle des dents du maxillaire ou de la mandibule de l'individu, le dispositif de correction comprenant en outre une embase formant le bord de la cavité des alvéoles dentaires et les alvéoles dentaires présentent une dureté inférieure à l'embase.

Selon une option, le dispositif de correction comprend en outre au moins un élément d'extension associé à une alvéole dentaire et s'étendant depuis l'embase du dispositif selon une orientation déterminée, et l'élément d'extension est adapté pour appliquer une force déterminée sur au moins une surface de la dent adaptée pour être reçue dans l'alvéole dentaire.

Selon une option, un élément d'extension présente une forme choisie parmi une forme de languette, une forme d'arceau, une forme de T ou une forme de L.

Selon une option, l'élément d'extension présente une forme de L, de T ou de languette, et un angle de force formé entre l'élément d'extension et un axe parallèle à une hauteur d'une paroi verticale de l'alvéole dentaire auquel l'élément est associé est déterminé en fonction d'un niveau de force à appliquer sur la surface verticale de la dent lors du port du dispositif de correction.

Selon une option, l'élément d'extension est formé dans le même matériau que l'embase.

Selon une option, une zone interalvéolaire de la gouttière séparant deux alvéoles dentaires adjacentes présente une dureté inférieure à une dureté de la zone restante formant ces deux alvéoles dentaires.

Selon une option, l'embase est formée dans un matériau à mémoire de forme.

Selon une option, les alvéoles dentaires sont formées dans un premier matériau et l'embase est formée dans un second matériau et le premier matériau formant les alvéoles présentent une dureté inférieure au second matériau formant l'embase.

Selon une option, les alvéoles dentaires et l'embase sont formées dans un même matériau, et les alvéoles dentaires présentent des perforations permettant de réduire leur dureté par rapport à la dureté de l'embase.

La présente divulgation présente également un procédé de fabrication d'un dispositif de correction pour corriger le positionnement des dents du maxillaire ou de la mandibule d'un individu, le procédé comprenant :
une obtention d'une position initiale et d'une position à atteindre des dents du maxillaire ou de la mandibule d'un individu ;
une détermination d'un niveau de force et d'une direction de la force à appliquer sur au moins une dent de l'individu pour corriger le positionnement des dents de la position initiale vers la position à atteindre ;
une modélisation par ordinateur d'un dispositif de correction selon l'un quelconque des exemples décrits dans le présent document ; et
une fabrication de ce dispositif de correction.

Selon une option dans laquelle le dispositif modélisé comprend un élément d'extension, le procédé peut en outre comprendre, pour une dent spécifique de l'individu : une détermination d'un nombre d'éléments d'extension à appliquer sur la dent spécifique ; une détermination d'une orientation de chaque élément d'extension sur l'embase du dispositif de correction vis-à-vis d'une surface verticale de l'alvéole dentaire adaptée pour recevoir la dent spécifique en fonction d'un niveau de force à appliquer et d'une direction de la force à appliquer sur la dent spécifique.

Selon une option dans laquelle le dispositif modélisé comprend un élément d'extension qui présente une forme choisie parmi une forme de languette, une forme d'arceau, une forme de T ou une forme de L, le procédé peut en outre comprendre, pour une dent spécifique de l'individu, une détermination d'une forme d'un élément d'extension à appliquer sur la dent spécifique en fonction d'un mouvement à appliquer sur cette dent.

Les exemples de dispositifs de correction présentés par le présent document permettent donc une correction plus rapide et plus ample du positionnement des dents d'un individu dans la mesure où ces dispositifs de correction présentent une embase dont la dureté est supérieure à celle des alvéoles ce qui permet d'agir directement au niveau de la base des dents pour faciliter leur déplacement.

Par ailleurs, le fait de pouvoir ajouter des éléments d'extension s'étendant depuis l'embase du dispositif de correction présentant notamment différentes formes et différentes orientations permet également d'appliquer des forces à des endroits précis de la dentition dans le but de pouvoir réaliser des mouvements de la dentition qui sont difficiles ou impossibles à réaliser par le port de gouttières traditionnelles.

Dans cette mesure, le port d'un quelconque des dispositifs de correction présentés dans cet exposé permet d'augmenter l'amplitude de correction et la vitesse de correction du positionnement des dents par rapport aux gouttières présentées dans l'art antérieur. Par conséquent, un kit de correction comprenant un ensemble de dispositifs de correction selon le présent exposé comprend un nombre de dispositifs de correction réduit par rapport aux kits de l'art antérieur pour un même déplacement des dents souhaité. Le temps de traitement permettant de corriger le positionnement des dents d'un individu d'une position initiale à une position finale est donc réduit.

### Brève description des dessins

D'autres caractéristiques, détails et avantages apparaîtront à la lecture de la description détaillée ci-après, et à l'analyse des dessins annexés, sur lesquels :
**Fig. 1**

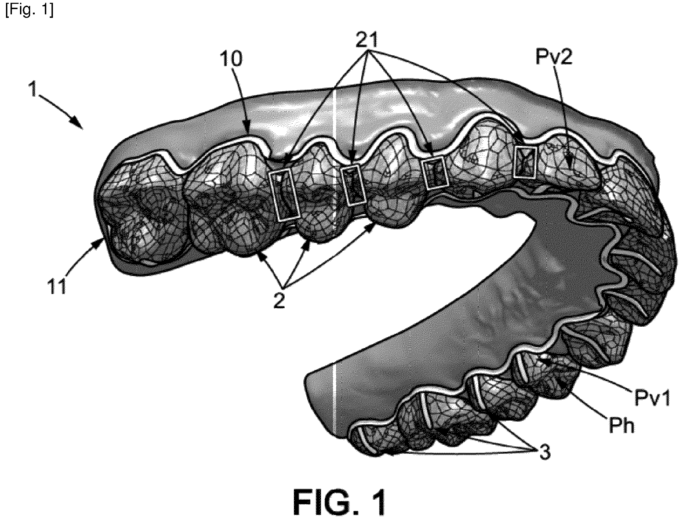

   [Fig. 1] représente un exemple de dispositif de correction du positionnement des dents pour un maxillaire porté par un individu.
**Fig. 2**

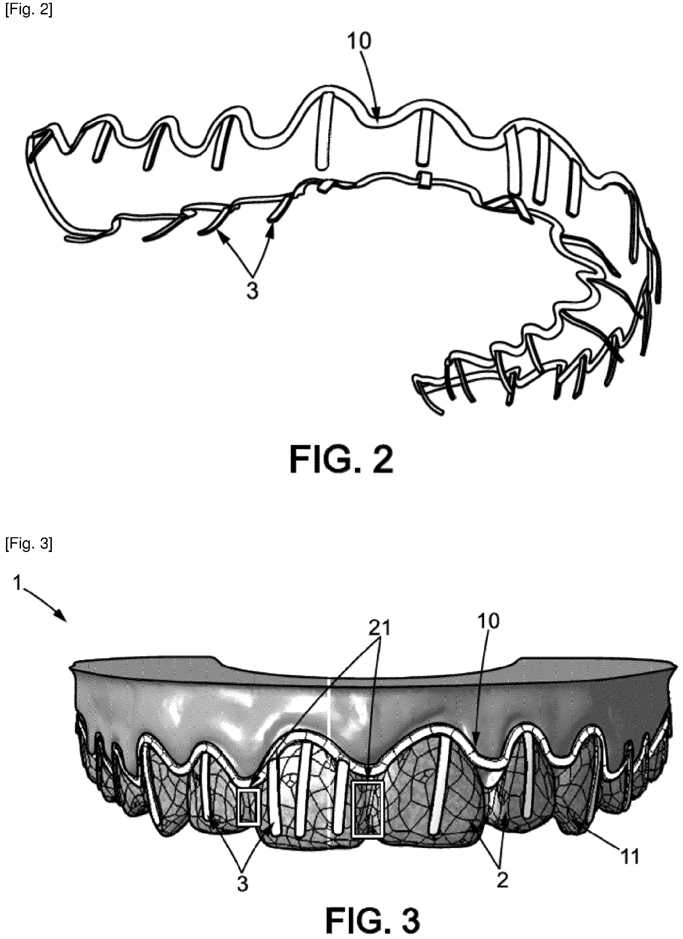

   [Fig. 2] représente un exemple d'embase de dispositif de correction présentant des éléments d'extension.
**Fig. 3**
   [Fig. 3] représente un autre exemple de dispositif de correction porté par un individu.
**Fig. 4**

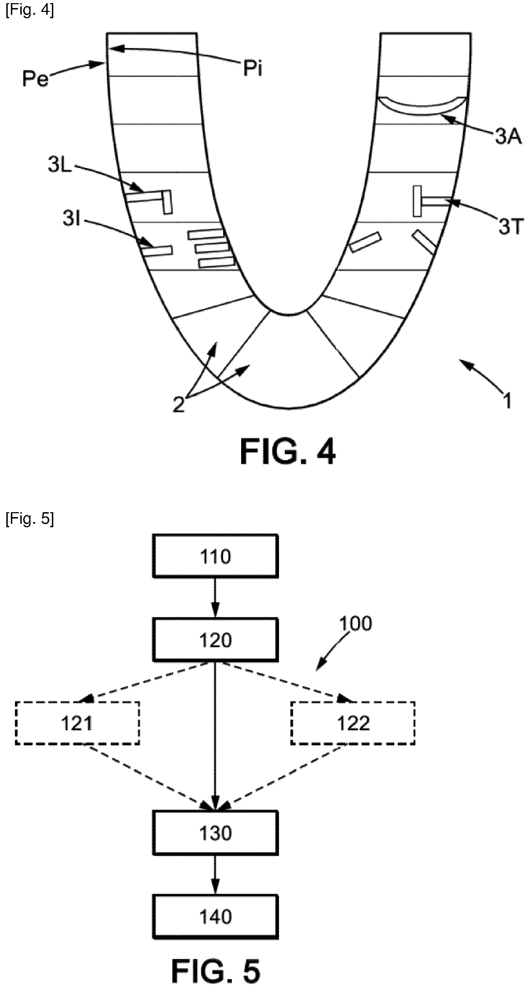

   [Fig. 4] représente schématiquement un exemple de dispositif de correction pour un maxillaire vue du dessus ou un exemple de dispositif de correction pour une mandibule vue du dessous.
**Fig. 5**
   [Fig. 5] représente un exemple de procédé de fabrication d'un dispositif de correction.
**Fig. 6**

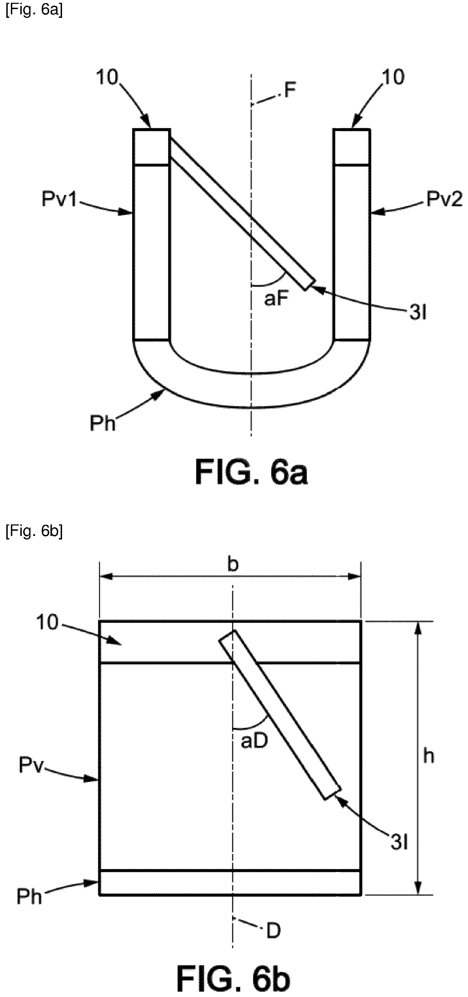

   [Fig. 6a] représente un exemple d'alvéole dentaire du dispositif de correction vue de côté.
   [Fig. 6b] représente un exemple d'alvéole dentaire du dispositif de correction vue en coupe.

### Description des modes de réalisation

Il est maintenant décrit en référence aux figures 1 à 4 un exemple de dispositif de correction 1 du positionnement des dents du maxillaire ou de la mandibule d'un individu comprenant une gouttière orthodontique 11 et une embase 10. Un exemple de dispositif de correction 1 du positionnement des dents est notamment représenté sur les figures 1 et 3 lorsque cette gouttière est portée sur le maxillaire de l'individu.

Une dent comprend notamment un ensemble de surfaces sensiblement verticales et une surface sensiblement horizontale. Une première surface verticale se trouve du côté de la langue et une deuxième surface verticale fait face à une lèvre, la lèvre inférieure s'il s'agit d'une dent de la mandibule ou la lèvre supérieure s'il s'agit d'une dent du maxillaire. Ces deux surfaces verticales sont jointes entre elles au niveau de leur sommet situé à l'opposé de la gencive par la surface sensiblement horizontale. La surface sensiblement horizontale de la dent désigne donc la surface des dents avec laquelle un individu croque un aliment. Lorsqu'il sera fait référence à la surface verticale d'une dent dans la présente divulgation, il s'agira de l'une quelconque des deux surfaces sensiblement verticales présentées ci-dessus. De la même façon, lorsqu'il sera fait référence à la surface horizontale d'une dent, il s'agira de la surface sensiblement horizontale décrite ci-dessus. Les surfaces verticales des dents en contact avec les surfaces verticales des dents adjacentes ne seront pas considérées pas la présente divulgation puisque ces surfaces ne sont pas en contact avec la gouttière lorsque cette gouttière est portée par un individu.

La gouttière 11 du dispositif de correction 1 comprend une cavité ouverte formée par une pluralité d'alvéoles dentaires individuelles 2. Les alvéoles dentaires individuelles 2 sont adaptées pour recevoir chacune respectivement une dent d'un patient, comme représenté sur la figure 1, lors du port du dispositif de correction 1. La cavité ouverte désigne donc l'ouverture par laquelle un individu peut mettre en place la gouttière sur ses dents. En l'occurrence, les alvéoles dentaires épousent la forme des dents du patient destiné à porter le dispositif de correction 10.

Ainsi, une alvéole dentaire 2 comprend une première paroi et une deuxième paroi sensiblement verticales Pv et une paroi sensiblement horizontale Ph adaptées pour venir en contact avec respectivement les surfaces verticales du côté de la langue et de la lèvre, et la surface horizontale de la dent qu'elle reçoit. Les parois verticales Pv d'une alvéole dentaire peuvent être légèrement bombées tandis que la paroi horizontale de l'alvéole dentaire peut être légèrement creusée. La première paroi sensiblement verticale de l'alvéole dentaire adaptée pour venir en contact avec la surface verticale du côté de la langue de la dent qu'elle reçoit est référencée par Pv1 sur les figures 1 et 6a. La deuxième paroi sensiblement verticale de l'alvéole dentaire adaptée pour venir en contact avec la surface verticale du côté de la lèvre de la dent qu'elle reçoit est référencée par Pv2 sur les figures 1 et 6a.

La gouttière 11 comprend également des zones interalvéolaires 21. Une zone interalvéolaire 21 correspond à une zone de jonction entre deux alvéoles dentaires adjacentes de la gouttière. Des exemples de zones interalvéolaires sont notamment représentés sur les figures 1 et 3.

L'embase 10 du dispositif de correction forme le bord de la cavité ouverte de la gouttière 11 et forme donc le bord des alvéoles dentaires du dispositif de correction 1. L'embase constitue ainsi la partie du dispositif de correction qui porte les alvéoles dentaires de la gouttière.

Un exemple d'embase 10 est notamment représenté sur la figure 1. Sur cette figure, l'embase 10 est solidaire des alvéoles dentaires 2 et constitue donc la base de chacune des alvéoles dentaires. Un autre exemple d'embase, cette fois-ci seule, est également représenté sur la figure 2.

L'embase peut donc être fabriquée d'un seul tenant avec les alvéoles dentaires ou indépendamment des alvéoles. Dans ce deuxième cas, les alvéoles dentaires peuvent par exemple être rendues solidaires de l'embase par collage, notamment par thermocollage. L'embase, tout comme les alvéoles dentaires, peut par exemple être thermoformée, notamment par injection thermoplastique ou par impression tridimensionnelle. En particulier, l'embase et les alvéoles dentaires formant le dispositif de correction peuvent être thermoformées ou imprimées sur la base d'un fichier modélisé par ordinateur.

La figure 6a représente justement une vue de côté d'un exemple d'alvéole dentaire 2 lorsque cette alvéole est portée par une partie de l'embase 10 formant son bord. La dent du patient est adaptée pour être reçue entre les parois verticales Pv1 et Pv2 de l'alvéole dentaire. La figure 6b représente quant à elle une coupe de l'alvéole dentaire selon l'axe F représenté sur la figure 6a.

Les parois verticales d'une alvéole dentaire dont le bord est formé par l'embase comprennent chacune une base b représentant une largeur de l'alvéole dentaire permettant d'accueillir la dent et une hauteur h représentant une profondeur de l'alvéole dentaire permettant d'accueillir la dent.

Dans le dispositif de correction du positionnement des dents de la présente divulgation, les alvéoles dentaires 2 présentent une dureté inférieure à l'embase 10. Les alvéoles dentaires 2 présentent donc plus d'élasticité que l'embase 10.

Dans des exemples, la pluralité d'alvéoles dentaires peut présenter une dureté inférieure à 45 Shore A. La pluralité d'alvéoles dentaires par exemple présenter une dureté comprise entre 20 et 45 Shore A.

Dans des exemples, l'embase peut présenter une dureté supérieure à 45 Shore A, avantageusement supérieure à 60 Shore A. L'embase peut par exemple présenter une dureté comprise entre 45 et 80 Shore A.

Un dispositif de correction 1 présentant une embase dont la dureté est supérieure à celui des différentes alvéoles dentaires permet d'augmenter la vitesse de correction du positionnement des dents en agissant au niveau de leur base de sorte que la durée de port du dispositif de correction pour passer d'une première position initiale à une deuxième position déterminée par le praticien orthodontiste est plus courte que la durée d'usage de port des gouttières proposées par l'art antérieur.

Dans des premiers exemples, l'embase 10 et les alvéoles dentaires 2 sont formées dans un même matériau. Dans ces exemples, les alvéoles dentaires 2 comprennent des perforations (non représentées), permettant de réduire leur dureté par rapport à la dureté de l'embase 10. L'embase peut, à ce titre, être dépourvue de perforations ou peut présenter une densité de perforations inférieure à la densité de perforations prodiguées dans les alvéoles dentaires. En d'autres termes, lorsque l'embase comprend des perforations, pour une même surface considérée et pour des perforations de même nature, les alvéoles dentaires comprennent un nombre de perforations plus important que l'embase. Les perforations dont il est question dans le présent exposé peuvent par exemple correspondre à des microperforations.

Dans des deuxièmes exemples, l'embase 10 et les alvéoles dentaires 2 sont formées dans deux matériaux différents.

Dans ces deuxièmes exemples, la pluralité d'alvéoles dentaires peut être formée dans un premier matériau. Dans des exemples, ce premier matériau peut présenter une dureté inférieure à 45 Shore A. Le premier matériau peut par exemple présenter une dureté comprise entre 20 et 45 Shore A.

Le premier matériau peut comprendre un polymère, par exemple un polyuréthane, un polypropylène ou un polyéthylène. Ce premier matériau peut par exemple comprendre un polyéthylène téréphtalate glycolisé (PETg).

Dans ces deuxièmes exemples, l'embase peut être formée dans un deuxième matériau. La dureté du deuxième matériau formant l'embase est supérieure à la dureté du premier matériau formant les alvéoles dentaires. Dans des exemples, le deuxième matériau peut présenter une dureté supérieure à 45 Shore A, avantageusement supérieure à 60 Shore A. Le deuxième matériau peut par exemple présenter une dureté comprise entre 45 et 80 Shore A.

Le deuxième matériau formant l'embase peut par exemple comprendre un caoutchouc vulcanisé, un polyuréthane ou un polyéthylène téréphtalate glycolisé. Le deuxième matériau formant l'embase peut par exemple comprendre un mélange entre un polyuréthane et un polyéthylène téréphtalate glycolisé.

Le deuxième matériau formant l'embase peut par ailleurs être un matériau à mémoire de forme. Le matériau à mémoire de forme peut par exemple présenter des caractéristiques lui permettant de retrouver sa forme lorsqu'il est soumis à une certaine température, par exemple lorsqu'il est soumis à une température corporelle, ou lorsqu'il est soumis à une température supérieure à un seuil de déformation prédéterminé.

Dans des exemples dans lesquels l'embase est formée dans un matériau à mémoire de forme, l'augmentation de la vitesse de correction du positionnement des dents pour passer d'une première position initiale à une deuxième position déterminée est encore accrue. En l'occurrence, ces exemples combinent astucieusement l'utilisation de la force de friction caractéristique des gouttières habituelles au niveau des alvéoles dentaires à l'utilisation d'un matériau à mémoire de forme au niveau de l'embase permettant de déformer la gouttière de manière à suivre le déplacement des dents provoqué par la friction. Cela permet de réduire la vitesse de diminution du niveau de force de friction appliquée par les alvéoles dentaires sur les dents. En effet, la force de friction exercée par les alvéoles dentaires sur les dents de l'individu diminue progressivement avec le port de la gouttière à mesure que les dents se déplacent. Les dents se déplacent donc très rapidement dans les premiers jours du port de la gouttière pendant lesquels la force de friction opérée par les alvéoles dentaires sur les dents est maximale. La vitesse de déplacement des dents tend ensuite à diminuer au fur et à mesure du déplacement des dents puisque ce déplacement entraine une diminution de la force de friction appliquée par le contact des alvéoles sur les dents. L'utilisation d'un matériau à mémoire de forme au niveau de l'embase du dispositif de correction permet de déformer, dans une certaine mesure, le dispositif de correction à mesure que les dents se déplacent, de sorte que le niveau de force de friction opérée par les alvéoles sur les dents lors du port du dispositif de correction décroit moins rapidement qu'avec les gouttières de l'art antérieur. En ce sens, pour un même déplacement des dents souhaité, le port d'un dispositif de correction comprenant une gouttière et une embase à mémoire de forme réduit sensiblement la durée du port de la gouttière nécessaire pour opérer ce déplacement.

Dans des exemples, la dureté des alvéoles dentaires peut être différente entre une première zone et une deuxième zone de ces alvéoles dentaires 2. Dans des exemples, la dureté d'une zone interalvéolaire 21 séparant deux alvéoles dentaires adjacentes est inférieure à la dureté de la zone restante formant ces deux alvéoles. En l'occurrence, dans des exemples dans lesquels les alvéoles dentaires 2 comprennent des perforations, la zone interalvéolaire 21 peut comprendre une densité de perforations plus importante que la densité de perforations appliquée dans la zone restante des alvéoles dentaires. Ainsi, et comme expliqué précédemment, pour une même surface considérée et pour des perforations de même nature, la zone interalvéolaire 21 comprend un nombre de perforations plus important que la zone restante des alvéoles dentaires 2.

Dans des exemples, la dureté d'une zone interalvéolaire 21 formant la jonction entre deux alvéoles dentaires adjacentes est inférieure à 30 Shore A. Elle peut par exemple être comprise entre 20 et 30 Shore A. Dans ces exemples, la dureté de la zone restante formant ces deux alvéoles dentaires peut être supérieure à 30 Shore A et est avantageusement comprise entre 35 et 40 Shore A.

En l'occurrence, la modification de la dureté de la gouttière dans les zones interalvéolaires 21 de jonction entre les alvéoles dentaires 2 permet d'agir de manière ciblée au niveau des jonctions interdentaires de la dentition, notamment pour permettre de corriger un diastème ou un chevauchement partiel entre deux dents adjacentes. Il s'agit donc d'une zone privilégiée pour laquelle prévoir davantage de souplesse améliore l'efficacité de la correction du positionnement de dents.

Dans des exemples, la gouttière orthodontique peut également comprendre au moins un élément d'extension 3 associé à une alvéole dentaire et s'étendant depuis l'embase du dispositif de correction. Un élément d'extension s'étend donc depuis le bord d'une alvéole dentaire à laquelle il est associé lorsque la gouttière et l'embase du dispositif de correction 1 sont assemblés dans la mesure où l'embase forme le bord des alvéoles dentaires. Un élément d'extension 3 associé à une alvéole dentaire s'étend depuis le bord de cette alvéole dentaire entre les premières et secondes parois verticales Pv1 et Pv2 de l'alvéole dentaire. Le terme « entre » s'interprète ici comme compris dans un volume s'étendant entre ces deux parois. Ces exemples sont notamment représentés sur les figures 1 à 3 dans lesquels l'ensemble des éléments d'extension s'étend depuis l'embase de la gouttière.

Un élément d'extension peut par ailleurs être formé du même matériau que l'embase de façon à pouvoir fabriquer l'embase et cet élément d'une seule pièce. Un élément d'extension peut ainsi être formé dans le deuxième matériau présentant une dureté inférieure au premier matériau formant les alvéoles dentaires. Un élément d'extension peut présenter une dureté supérieure à 45 Shore A, par exemple supérieure à 60 Shore A ou une dureté comprise entre 45 et 80 Shore A. Un élément d'extension peut ainsi être formé dans un matériau à mémoire de forme. L'élément d'extension peut par exemple être formé dans un matériau comprenant un caoutchouc vulcanisé, un polyuréthane ou un polyéthylène téréphtalate glycolisé, ou encore un matériau comprenant un mélange entre un polyuréthane et un polyéthylène téréphtalate glycolisé.

Un élément d'extension 3 associé à une alvéole dentaire est ainsi adapté pour appliquer une force déterminée sur une surface ou sur plusieurs surfaces de la dent adaptée pour être accueillie dans l'alvéole, notamment sur une surface verticale de cette dent.

Un exemple de dispositif de correction 1 peut comprendre plusieurs éléments d'extension adaptés pour exercer une force respective sur une seule dent comme représenté sur les figures 2 à 4. Un exemple de dispositif de correction peut également comprendre plusieurs éléments d'extension, chacun étant adapté pour exercer une force sur une dent respective d'un patient comme représenté sur les figures 1 à 4. La figure 4 représente un exemple de gouttière pour un maxillaire vue du dessus ou un exemple de gouttière pour une mandibule vue du dessous.

Dans des exemples, le nombre d'éléments d'extensions associés à une dent est déterminé en fonction d'un niveau de force à appliquer sur cette dent. En l'occurrence, ajouter des éléments d'extensions adaptées à venir en contact avec une même surface verticale de la dent permet d'augmenter le niveau de force appliqué sur la surface de cette dent et donc le déplacement souhaité de cette dent. Le niveau de force à appliquer sur une dent d'un individu peut par exemple être déterminé à partir du sexe de l'individu, de la densité osseuse de son maxillaire ou de sa mandibule, des muscles de sa mâchoire, etc.

Dans des exemples, un élément d'extension s'étend depuis l'embase du dispositif de correction selon une orientation déterminée en fonction du niveau de force et de la direction de la force à appliquer sur la dent.

Un élément d'extension peut par exemple présenter une forme choisie parmi une forme de languette, une forme d'arceau, une forme de T ou une forme de L. Un élément d'extension 3 présentant une forme de T ou présentant une forme de L permet d'appliquer une force sur une surface de la dent entrainant un mouvement de rotation de cette dent comme expliqué ci-après. Un élément d'extension 3 en forme de T ou en forme de L peut donc être désigné comme un élément d'extension de rotation.

Par ailleurs, les mouvements des dents auxquels il sera fait référence dans la suite de la présente demande comprennent les mouvements de dents connus de l'Homme du Métier que sont la version (« *tipping* » en anglais), l'égression (« *extrusion* » en anglais), la rotation (« *bodily rotation»* en anglais), la traction (*« torque »* en anglais), la translation (*« bodily movement »* en anglais), et l'ingression (*« intrusion»* en anglais).

Dans des exemples, le dispositif de correction peut comprendre un ou plusieurs éléments d'extension choisis parmi le groupe suivant :
- élément en forme de languette,
- élément d'extension de rotation en forme de L,
- élément d'extension de rotation en forme de T,
- élément d'extension en forme d'arceau.
Le dispositif de correction peut comprendre une combinaison quelconque des éléments d'extension décrit dans ce groupe, le choix du nombre et du type d'éléments d'extension pour chaque dent étant déterminé en fonction des besoins du porteur. De plus, pour une dent, le dispositif de correction peut comprendre au moins un élément d'extension de chaque côté de la dent, c'est-à-dire au moins un élément d'extension en appui contre la face verticale de la dent située du côté de la lèvre et au moins un élément d'extension en appui contre la face verticale de la dent située du côté de la langue, sauf pour l'élément en forme d'arceaux qui, comme décrit ci-après, s'étend le long de ces deux surfaces verticales et de la surface horizontale de la dent. Un exemple de dispositif de correction comprenant des éléments d'extensions adaptés pour venir en appui contre la face verticale de la dent située du côté de la lèvre et contre la face verticale de la dent située du côté de la langue est notamment représenté en figure 4.

Un élément d'extension en forme d'arceau 3A s'étend transversalement le long d'une paroi de l'alvéole depuis un premier bord de l'embase adapté pour être situé du côté de la langue à un second bord adapté pour être situé du côté de la lèvre lorsque le dispositif est porté. En d'autres termes, l'élément en forme d'arceau est adapté pour venir en contact avec les surfaces sensiblement verticales du côté de la langue et de la lèvre et avec la surface sensiblement horizontale de la dent associée lorsque le dispositif de correction est porté par un individu. En l'occurrence, un élément d'extension en forme d'arceau 3A permet d'appliquer une force plus importante sur la dent sur laquelle il est appliqué qu'un élément d'extension en forme de languette 3l ou qu'un élément d'extension de rotation. Un élément en forme d'arceau 3A adapté pour venir en contact avec les surfaces sensiblement verticales et la surface sensiblement horizontale de la dent permet d'appliquer un mouvement vertical à la dent, c'est-à-dire qu'un élément d'arceau permet d'appliquer un mouvement d'ingression ou d'égression à la dent.

Un élément d'extension en forme de languette 3l doit être compris dans la présente description comme un élément sensiblement allongé, par exemple de forme rectangulaire, adapté pour venir en contact avec une surface sensiblement verticale de la dent ciblée lors du port de la gouttière par l'individu. L'élément d'extension 3l en forme de languette s'étend depuis un bord d'une alvéole dentaire de façon à venir en appui contre la surface verticale de la dent située du même côté que le bord.

Par ailleurs, une orientation de la languette 3l vis-à-vis de la paroi verticale de l'alvéole dentaire située du côté du bord de l'alvéole depuis lequel s'étend l'élément d'extension peut être déterminée en fonction du niveau de force à appliquer et de la direction de la force à appliquer sur la dent.

Dans des exemples, un angle de force aF formé entre l'élément d'extension en forme de languette 3l et un axe parallèle à la hauteur h de la paroi verticale Pv de l'alvéole dentaire auquel l'élément 3l est associé est déterminé en fonction d'un niveau de force à appliquer sur la surface verticale de la dent lors du port du dispositif de correction. Cet axe est représenté par l'axe F sur la figure 6a.

Dans des exemples, augmenter un angle de force aF formé entre l'élément d'extension en forme de languette 3l et l'axe parallèle à la hauteur h de la paroi verticale Pv de l'alvéole dentaire auquel l'élément est associé permet d'augmenter le niveau de force appliqué sur la surface verticale de la dent lors du port du dispositif de correction.

Dans des exemples, un angle de direction aD formé entre l'élément d'extension en forme de languette 3l et un axe perpendiculaire à la hauteur et à la base de la paroi verticale Pv de l'alvéole dentaire auquel l'élément est associé permet de déterminer une direction de la force à appliquer sur la surface verticale de la dent lors du port du dispositif de correction. Cet axe est représenté par l'axe D sur la figure 6b.

Un élément en forme de languette permet d'appliquer un mouvement de version, un mouvement de rotation ou un mouvement de translation sur la dent.

Un élément d'extension de rotation, c'est-à-dire un élément en forme de L ou en forme de T, comprend une première portion, par exemple de forme sensiblement rectangulaire, s'étendant depuis le bord de l'alvéole dentaire et une deuxième portion s'étirant depuis l'extrémité de la première portion opposée au bord de l'alvéole dentaire, la deuxième portion s'étendant sensiblement perpendiculairement par rapport à la première.

La première portion de l'élément d'extension de rotation est vrillée sur sa longueur pour appliquer un mouvement de rotation sur la dent. Notamment, le sens de rotation appliquée à la vrille de la première portion de l'élément d'extension de rotation correspond au sens de rotation à appliquer sur la dent.

Pour un élément d'extension en forme de L, illustré par la référence 3L sur la figure 4, la deuxième portion comprend une première extrémité qui s'étend perpendiculairement depuis l'extrémité de la première portion opposée au bord de l'alvéole dentaire et une deuxième extrémité libre.

L'élément d'extension de rotation en forme de L peut par exemple être positionné sur le bord de l'alvéole dentaire auquel il est associé de façon à ce que tout ou partie de sa première portion se trouve en contact avec une partie centrale d'une surface verticale de la dent et qu'une extrémité libre de sa deuxième portion soit adaptée à se retrouver en appui sur un premier côté de la surface verticale de la dent lors du port du dispositif de correction. Dans cette configuration, la vrille de la première portion de l'élément d'extension en forme de L est appliquée dans la direction dans laquelle s'étend l'extrémité libre de la deuxième portion. La force d'appui de la deuxième portion sur la dent est donc notamment appliquée par la vrille de la première portion. De cette façon, la deuxième extrémité libre de la deuxième portion de l'élément de rotation peut appliquer une force de poussée sur le premier côté de la surface verticale de la dent. Un appui sur un seul côté de la dent permet donc d'entrainer sa rotation.

Pour un élément d'extension en forme de T, illustré par la référence 3T sur la figure 4, la deuxième portion s'étend transversalement depuis l'extrémité de la première portion opposée au bord de l'alvéole dentaire et comprend deux extrémités libres.

L'élément d'extension de rotation en forme de T peut également être positionné sur le bord de l'alvéole dentaire auquel il est associé de façon à ce que tout ou partie de sa première portion se trouve en contact avec une partie centrale d'une surface verticale de la dent et qu'une première extrémité libre de sa deuxième portion soit adaptée à se retrouver en appui sur un premier côté de la surface verticale de la dent tandis que sa deuxième extrémité libre est adaptée pour se retrouver en contact avec un second côté de la première surface verticale de la dent lors du port du dispositif de correction. Le sens de rotation de la vrille de la première portion de l'élément de rotation en forme de T permet donc de déterminer quelle extrémité de la deuxième portion appliquera une force de poussée sur la dent.

Dans un exemple où la vrille est appliquée de façon à ce qu'une première extrémité de la deuxième portion applique la force de poussée sur un premier côté d'une première surface verticale de la dent, par exemple du côté de la langue, la deuxième extrémité de la deuxième portion appliquera, quant à elle, une force de poussée sur une surface d'une paroi verticale de l'alvéole dentaire adaptée à venir en contact avec le second côté de la première surface verticale de la dent. Si l'on considère que la première surface verticale de la dent est du côté de la langue, la paroi verticale de l'alvéole dentaire adaptée à venir en contact avec le second côté de la surface verticale de la dent côté langue correspond à la première paroi verticale Pv1. Dans cette configuration, la force de poussée exercée par la deuxième extrémité de la deuxième portion sur la surface de la première paroi verticale Pv1 de l'alvéole dentaire sera partiellement transmise à la surface de la deuxième paroi verticale Pv2 de l'alvéole dentaire située en vis-à-vis. Par conséquent, la deuxième paroi verticale de l'alvéole dentaire Pv2 appliquera une force de poussée sur la deuxième surface verticale de la dent, côté lèvre, et plus précisément sur le second côté de la deuxième surface verticale de la dent du côté des lèvres puisque c'est de ce côté que la deuxième extrémité de la deuxième portion de l'élément en forme de T vient appuyer, renforçant ainsi le mouvement de rotation de la dent.

En d'autres termes, une première extrémité de la deuxième portion de l'élément en forme de T vient en appui direct sur un premier côté d'une première surface verticale de la dent, afin d'exercer une force de poussée sur ce premier côté, entrainant ainsi une rotation de la dent. Une deuxième extrémité de la deuxième portion de l'élément en forme de T vient quant à elle en appui sur une première paroi verticale de l'alvéole dentaire en vis-à-vis du second côté de la première surface verticale de la dent, exerçant ainsi une force de poussée sur la première paroi verticale. Cette force de poussée exercée sur la première paroi verticale de l'alvéole dentaire en vis-à-vis du second côté de la première surface verticale de la dent, dans la mesure où les parois verticales d'une alvéole dentaire sont jointes entres-elles, est transmise à la deuxième paroi verticale de l'alvéole dentaire et plus précisément à la surface de la deuxième paroi verticale de l'alvéole dentaire située en vis-à-vis du second côté de la seconde surface verticale de la dent. La deuxième extrémité de la deuxième portion vient donc exercer, indirectement, une force de poussée sur le second côté de la deuxième surface verticale de la dent, renforçant le mouvement de rotation de la dent.

De la même façon que pour un élément en forme de languette, une orientation d'un élément d'extension de rotation vis-à-vis de la paroi verticale de l'alvéole dentaire située du côté de la partie de l'embase depuis laquelle s'étend l'élément d'extension peut être déterminée en fonction du niveau de force à appliquer et de la direction de la force à appliquer sur la dent.

Dans des exemples, un angle de force aF formé entre l'élément d'extension en forme de rotation et un axe parallèle à la hauteur h de la paroi verticale Pv de l'alvéole dentaire auquel l'élément 3l est associé permet de déterminer un niveau de force appliqué par la première portion sur la partie centrale de la surface verticale de la dent lors du port du dispositif de correction. Il s'agit de l'axe F sur la figure 6a.

Dans des exemples, l'angle de force aF formé entre l'élément d'extension en forme de rotation et un axe parallèle à la hauteur h de la paroi verticale Pv de l'alvéole dentaire auquel l'élément 3l est associé permet de déterminer un niveau de force appliqué par l'extrémité libre de la deuxième portion adaptée pour venir en appui sur le premier côté de la surface verticale de la dent lors du port du dispositif de correction. Il s'agit également de l'axe F sur la figure 6a.

Dans des exemples, un angle de direction aD formé entre l'élément d'extension en forme de rotation et un axe perpendiculaire à la hauteur et à la base de la paroi verticale Pv de l'alvéole dentaire auquel l'élément est associé permet de déterminer une direction de la force à appliquer par la première portion de l'élément de rotation sur la surface verticale de la dent lors du port du dispositif de correction. Cet axe est représenté par l'axe D sur la figure 6b.

L'utilisation d'éléments d'extension permet ainsi une application de force plus ciblée sur certaines parties des dents de façon à leur faire effectuer des mouvements précis, ces mouvements étant parfois impossibles à effectuer dans le cadre du port d'une gouttière traditionnelle. En particulier, les éléments d'extension permettent d'agir de manière individualisée sur les dents d'un patient alors qu'une gouttière traditionnelle agit indistinctement sur l'ensemble des dents de la mandibule ou du maxillaire. Par conséquent, la correction apportée à une dent pour laquelle la gouttière comprend un élément d'extension associé est donc plus précise que celle apportée par le port d'une gouttière traditionnelle et peut notamment comprendre un mouvement non applicable par la gouttière traditionnelle. Notamment, un mouvement de rotation d'une dent est difficile à mettre en œuvre par le port d'une gouttière traditionnelle.

Par ailleurs, un ensemble de gouttières traditionnelles, dans la mesure où ces gouttières sont modélisées par ordinateur à partir d'une position initiale et d'une position finale des dents après le port de l'ensemble de gouttières, ne permet pas toujours au praticien orthodontiste de bien comprendre quels sont les mouvements appliqués par chacune des gouttières et dans quelle mesure l'évolution du positionnement des dents du patient correspond à celui déterminé entre chacune des gouttières pour leur modélisation. En ce sens, la possibilité d'ajouter des éléments d'extension permettant d'agir de manière individuelle sur chaque dent permet au praticien orthodontiste d'avoir une meilleure compréhension des mouvements attendus sur les dents par le port des gouttières. Le contrôle de l'efficacité et de la précision de la correction du positionnement des dents d'un patient à l'aide d'un ensemble de dispositifs de correction selon la présente divulgation est donc facilité. Cela peut en outre permettre au praticien orthodontiste de modifier une prochaine gouttière que le patient doit porter en fonction de ses observations, notamment lorsque l'évolution du positionnement des dents attendue entre deux gouttières ne correspond pas à celle escomptée.

En référence à la figure 5, il est notamment présenté un exemple de procédé 100 de fabrication d'un dispositif de correction.

Comme illustré par le bloc 110, le procédé 100 comprend une obtention d'une position initiale et d'une position à atteindre des dents du maxillaire ou de la mandibule d'un individu. La position initiale des dents du maxillaire ou de la mandibule d'un individu peut par exemple être obtenue à partir d'une empreinte dentaire des dents du maxillaire ou de la mandibule de l'individu. La position à atteindre des dents du maxillaire ou de la mandibule d'un individu peut quant à elle être obtenue à partir d'une position des dents déterminée par le praticien orthodontiste.

Comme illustré par le bloc 120, le procédé 100 comprend une détermination d'un niveau de force et d'une direction de la force à appliquer sur au moins une des dents de l'individu pour corriger le positionnement des dents de la position initiale vers la position à atteindre.

Comme illustré par le bloc 130, le procédé 100 comprend une modélisation par ordinateur d'un dispositif de correction selon l'un quelconque des exemples décrits par la présente demande.

Comme illustré par le bloc 140, le procédé 100 comprend enfin une fabrication de ce dispositif de correction.

Dans des exemples, la fabrication du dispositif de correction du bloc 140 peut comprendre :
une formation d'une première pièce comprenant l'embase ;
une formation d'une deuxième pièce comprenant les alvéoles dentaires ; et
un collage de la première et de la deuxième pièce de façon à former le dispositif de correction.

Alternativement, la fabrication du dispositif de correction comprenant l'embase et les alvéoles dentaires peut être réalisée simultanément, par exemple par fabrication additive de l'ensemble.

Dans des modes de réalisation dans lesquels la gouttière comprend un ou plusieurs éléments d'extension 3 s'étendant depuis l'embase, ces éléments d'extension sont également formés avec l'embase et font partie de la première pièce.

La formation de la première pièce peut être effectuée par thermoformage, par exemple par injection thermoplastique ou par impression tridimensionnelle. La formation de la première pièce peut ainsi être effectuée par impression tridimensionnelle à partir d'un fichier numérique modélisant l'embase et éventuellement les éléments d'extension lorsque ces éléments sont solidaires de l'embase.

A l'instar de la première pièce, la deuxième pièce peut être formée par thermoformage, par exemple par injection thermoplastique ou par impression tridimensionnelle. La formation de la deuxième pièce peut également être effectuée à partir d'un fichier numérique modélisant les alvéoles dentaires de la gouttière.

Le collage de la première pièce et de la deuxième pièce pour former le dispositif de correction peut être un thermocollage.

Dans des exemples, le procédé 100 de fabrication du dispositif de correction peut comprendre, pour au moins une dent spécifique de l'individu, et comme représenté par le bloc 121 :
une détermination d'un nombre d'éléments d'extension à appliquer sur la dent spécifique ; et
une détermination d'une orientation de chaque élément d'extension sur l'embase du dispositif de correction vis-à-vis d'une surface verticale de l'alvéole dentaire adaptée pour recevoir la dent spécifique en fonction d'un niveau de force à appliquer et d'une direction de la force à appliquer sur la dent spécifique.

Dans des exemples, le procédé 100 de fabrication du dispositif de correction peut comprendre, pour au moins une dent spécifique de l'individu, et comme représenté par le bloc 122, une détermination d'une forme d'un élément d'extension à appliquer sur la dent spécifique en fonction d'un mouvement à appliquer sur cette dent.

Dans des exemples, lorsque le mouvement à appliquer à la dent spécifique est un mouvement de torque ou un mouvement de version, la forme déterminée peut correspondre à une forme de languette 3l.

Dans des exemples, lorsque le mouvement à appliquer à la dent spécifique est un mouvement d'ingression, la forme déterminée peut correspondre à une forme d'arceau 3A.

Dans des exemples, lorsque le mouvement à appliquer à la dent spécifique est un mouvement de rotation, la forme déterminée peut correspondre à une forme en L ou en T. Par ailleurs, lorsque le mouvement de rotation à appliquer sur de la dent spécifique est supérieur à un angle de rotation prédéterminé, la forme déterminée peut correspondre à une forme en T.

Bien entendu, les blocs 121 et 122 peuvent être combinés ensemble dans le cadre du procédé de fabrication du dispositif de correction.

La présente demande porte également sur un kit de correction comprenant un ensemble de dispositifs de correction selon l'un quelconque des exemples présentés ci-dessus. L'ensemble de dispositifs de correction du kit de correction est déterminé pour corriger le positionnement des dents d'un individu d'une position initiale à une position finale définie par le praticien orthodontiste en passant par une succession de positions intermédiaires. En particulier, chaque dispositif de correction de l'ensemble de dispositifs de correction est déterminé pour que les dents de l'individu évoluent d'une première position à une seconde position. La première position peut correspondre à la position initiale ou à une position intermédiaire des dents de l'individu. La deuxième position peut correspondre à une position intermédiaire des dents de l'individu ou à la position finale des dents de l'individu définie par le praticien orthodontiste.

Les exemples de dispositifs de correction présentés par le présent document permettent donc une correction plus rapide et plus ample du positionnement des dents d'un individu dans la mesure où ces dispositifs de correction présentent une embase dont la dureté est supérieure à celle des alvéoles ce qui permet d'agir directement au niveau de la base des dents pour faciliter leur déplacement.

Par ailleurs, le fait de pouvoir ajouter des éléments d'extension s'étendant depuis l'embase du dispositif de correction présentant notamment différentes formes et différentes orientations permet également d'appliquer des forces à des endroits précis de la dentition dans le but de pouvoir réaliser des mouvements de la dentition qui sont difficiles ou impossibles à réaliser par le port de gouttières traditionnelles.

Dans cette mesure, le port d'un quelconque des dispositifs de correction présentés dans cet exposé permet d'augmenter l'amplitude de correction et la vitesse de correction du positionnement des dents par rapport aux gouttières présentées dans l'art antérieur. Par conséquent, un kit de correction comprenant un ensemble de dispositifs de correction selon le présent exposé comprend un nombre de dispositifs de correction réduit par rapport aux kits de l'art antérieur pour un même déplacement des dents souhaité. Le temps de traitement permettant de corriger le positionnement des dents d'un individu d'une position initiale à une position finale est donc réduit.

## Revendications

1. Dispositif de correction du positionnement des dents du maxillaire ou de la mandibule d'un individu comprenant une gouttière orthodontique, la gouttière comprenant une cavité ouverte délimitée par un bord, et formée par une pluralité d'alvéoles dentaires (2) individuelles dont la forme est adaptée à celle des dents du maxillaire ou de la mandibule de l'individu,
le dispositif de correction comprenant en outre une embase (10), **caractérisé en ce que** ladite embase (10) forme le bord de la cavité des alvéoles dentaires (2), et
les alvéoles dentaires (2) présentent une dureté inférieure à l'embase (10).

2. Dispositif selon la revendication précédente comprenant en outre au moins un élément d'extension (3) associé à une alvéole dentaire (2) et s'étendant depuis l'embase (10) du dispositif selon une orientation déterminée,
l'élément d'extension (3) étant adapté pour appliquer une force déterminée sur au moins une surface de la dent adaptée pour être reçue dans l'alvéole dentaire (2).

3. Dispositif selon la revendication 2, dans lequel un élément d'extension présente une forme choisie parmi une forme de languette (3l), une forme d'arceau (3A), une forme de T (3T) ou une forme de L (3L).

4. Dispositif selon la revendication précédente, dans lequel l'élément d'extension (3) présente une forme de L (3L), de T (3T) ou de languette (3l), et dans laquelle un angle de force (aF) formé entre l'élément d'extension et un axe parallèle à une hauteur (h) d'une paroi verticale (Pv) de l'alvéole dentaire auquel l'élément d'extension (3) est associé est déterminé en fonction d'un niveau de force à appliquer sur la surface verticale de la dent lors du port du dispositif de correction.

5. Dispositif selon l'une quelconque des revendications 2 à 4 dans lequel l'élément d'extension (3) est formé dans le même matériau que l'embase (10).

6. Dispositif selon l'une quelconque des revendications précédentes, dans lequel une zone interalvéolaire (21) de la gouttière séparant deux alvéoles dentaires (2) adjacentes présente une dureté inférieure à une dureté de la zone restante formant ces deux alvéoles dentaires (2).

7. Dispositif selon l'une quelconque des revendications précédentes dans lequel l'embase (10) est formée dans un matériau à mémoire de forme.

8. Dispositif selon l'une quelconque des revendications précédentes, dans lequel les alvéoles dentaires (2) sont formées dans un premier matériau et l'embase (10) est formée dans un second matériau, le premier matériau formant les alvéoles dentaires (2) présentant une dureté inférieure au second matériau formant l'embase (10).

9. Dispositif selon l'une quelconque des revendications 1 à 7, dans lequel les alvéoles dentaires (2) et l'embase (10) sont formées dans un même matériau, et les alvéoles dentaires (2) présentent des perforations permettant de réduire leur dureté par rapport à la dureté de l'embase (10).

10. Dispositif selon la revendication précédente, dans lequel l'embase (10) comprend également des perforations, l'embase (10) présentant une densité de perforations inférieure à la densité de perforations prodiguées dans les alvéoles dentaires (2).

11. Procédé de fabrication d'un dispositif de correction pour corriger le positionnement des dents du maxillaire ou de la mandibule d'un individu, le procédé comprenant :
une obtention d'une position initiale et d'une position à atteindre des dents du maxillaire ou de la mandibule d'un individu ;
une détermination d'un niveau de force et d'une direction de la force à appliquer sur au moins une dent de l'individu pour corriger le positionnement des dents de la position initiale vers la position à atteindre ;
une modélisation par ordinateur d'un dispositif de correction (1) selon l'une quelconque des revendications de dispositifs de correction précédentes ; et
une fabrication de ce dispositif de correction (1).

12. Procédé selon la revendication précédente, lorsque le dispositif de correction modélisé est un dispositif de correction (1) selon l'une quelconque des revendications 2 à 5, dans lequel le procédé comprend en outre, pour une dent spécifique de l'individu :
une détermination d'un nombre d'éléments d'extension (3) à appliquer sur la dent spécifique ;
une détermination d'une orientation de chaque élément d'extension sur l'embase (10) du dispositif de correction (1) vis-à-vis d'une surface verticale (Pv) de l'alvéole dentaire (2) adaptée pour recevoir la dent spécifique en fonction d'un niveau de force à appliquer et d'une direction de la force à appliquer sur la dent spécifique.

13. Procédé selon l'une quelconque des revendications 11 ou 12 lorsque le dispositif de correction (1) modélisé est un dispositif de correction (1) selon l'une quelconque des revendications 3 ou 4, comprenant en outre, pour au moins une dent spécifique de l'individu, une détermination d'une forme d'un élément d'extension (3) à appliquer sur la dent spécifique en fonction d'un mouvement à appliquer sur cette dent.

## Patentansprüche

1. Vorrichtung zur Korrektur der Stellung von Zähnen des Oberkiefers oder des Unterkiefers einer Person, umfassend eine orthodontische Schiene, wobei die Schiene einen offenen Hohlraum umfasst, welcher durch einen Rand begrenzt ist, und durch eine Mehrzahl von individuellen Zahnzellen (2) gebildet ist, deren Form auf diejenige von Zähnen des Oberkiefers oder des Unterkiefers der Person angepasst ist,
wobei die Korrekturvorrichtung ferner eine Basis (10) umfasst, **dadurch gekennzeichnet, dass** die Basis (10) den Rand des Hohlraums der Zahnzellen (2) bildet und die Zahnzellen (2) eine geringere Härte als die Basis (10) aufweisen.

2. Vorrichtung nach dem vorhergehenden Anspruch, ferner umfassend wenigstens ein Erstreckungselement (3), welches einer Zahnzelle (2) zugeordnet ist und sich von der Basis (10) der Vorrichtung gemäß einer vorbestimmten Orientierung erstreckt,
wobei das Erstreckungselement (3) dazu eingerichtet ist, eine vorbestimmte Kraft auf wenigstens eine Fläche des Zahns anzuwenden, welcher dazu eingerichtet ist, in der Zahnzelle (2) aufgenommen zu sein.

3. Vorrichtung nach Anspruch 2, wobei ein Erstreckungselement eine Form aufweist, welche ausgewählt ist aus einer Zungenform (3l), einer Bogenform (3A), einer T-Form (3T) oder einer L-Form (3L).

4. Vorrichtung nach dem vorhergehenden Anspruch, wobei das Erstreckungselement (3) eine Form eines L (3L), eines T (3T) oder einer Zunge (3l) aufweist, und wobei ein Kraftwinkel (aF) welcher zwischen dem Erstreckungselement und einer Achse parallel zu einer Höhe (h) einer vertikalen Wand (Pv) der Zahnzelle gebildet ist, welcher das Erstreckungselement (3) zugeordnet ist, in Funktion eines Niveaus einer auf die vertikale Fläche des Zahns beim Tragen der Korrekturvorrichtung anzuwendenden Kraft bestimmt ist.

5. Vorrichtung nach einem der Ansprüche 2 bis 4, wobei das Erstreckungselement (3) aus einem gleichen Material wie die Basis (10) gebildet ist.

6. Vorrichtung nach einem der vorhergehenden Ansprüche, wobei eine Zwischenzellen-Zone (21) der Schiene, welche zwei benachbarte Zahnzellen (2) trennt, eine geringere Härte aufweist als eine Härte der verbleibenden Zone, welche diese beiden Zahnzellen (2) bildet.

7. Vorrichtung nach einem der vorhergehenden Ansprüche, wobei die Basis (10) aus einem Formgedächtnis-Material gebildet ist.

8. Vorrichtung nach einem der vorhergehenden Ansprüche, wobei die Zahnzellen (2) aus einem ersten Material gebildet sind und die Basis (10) aus einem zweiten Material gebildet ist, wobei das erste Material, welches die Zahnzellen (2) bildet, eine geringere Härte aufweist als das zweite Material, welches die Basis (10) bildet.

9. Vorrichtung nach einem der Ansprüche 1 bis 7, wobei die Zahnzellen (2) und die Basis (10) aus einem gleichen Material gebildet sind und die Zahnzellen (2) Perforierungen aufweisen, welche es erlauben, ihre Härte bezüglich der Härte der Basis (10) zu reduzieren.

10. Vorrichtung nach dem vorhergehenden Anspruch, wobei die Basis (10) ebenfalls Perforierungen aufweist, wobei die Basis (10) eine Dichte von Perforierungen aufweist, welche geringer als die Dichte von Perforierungen ist, welche in den Zahnzellen (2) bereitgestellt sind.

11. Verfahren zum Herstellen einer Korrekturvorrichtung zum Korrigieren der Stellung von Zähnen des Oberkiefers oder des Unterkiefers einer Person, das Verfahren umfassend:
ein Erhalten einer anfänglichen Position und einer zu erreichenden Position von Zähnen des Oberkiefers oder des Unterkiefers einer Person;
ein Bestimmen eines Niveaus einer Kraft und einer Richtung der Kraft, welche auf wenigstens einen Zahn der Person anzuwenden ist, um die Stellung der Zähne von der anfänglichen Position zu der zu erreichenden Position zu korrigieren;
eine Modellierung durch einen Computer einer Korrekturvorrichtung (1) nach einem der vorhergehenden Ansprüche zu Korrekturvorrichtungen; und
ein Herstellen der Korrekturvorrichtung (1).

12. Verfahren nach dem vorhergehenden Anspruch, wenn die modellierte Korrekturvorrichtung eine Korrekturvorrichtung (1) nach einem der Ansprüche 2 bis 5 ist, wobei das Verfahren ferner für einen spezifischen Zahn der Person umfasst:
ein Bestimmen einer Anzahl von Erstreckungselementen (3), welche auf den spezifischen Zahn anzuwenden sind;
ein Bestimmen einer Orientierung von jedem Erstreckungselement an der Basis (10) der Korrekturvorrichtung (1) gegenüber einer vertikalen Fläche (Pv) der Zahnzelle (2), welche dazu eingerichtet ist, den spezifischen Zahn aufzunehmen, in Funktion eines Niveaus einer Kraft, welche anzuwenden ist, und einer Richtung der Kraft, welche auf den spezifischen Zahn anzuwenden ist.

13. Verfahren nach einem der Ansprüche 11 oder 12, wenn die modellierte Korrekturvorrichtung (1) eine Korrekturvorrichtung (1) nach einem der Ansprüche 3 oder 4 ist, ferner umfassend, für wenigstens einen spezifischen Zahn der Person, ein Bestimmen einer Form eines Erstreckungselements (3), welches auf den spezifischen Zahn anzuwenden ist, in Funktion einer Bewegung, welche auf diesen Zahn anzuwenden ist.

## Claims

1. Device for correcting the positioning of the teeth of the maxilla or mandible of an individual comprising an orthodontic gutter, the gutter comprising an open cavity delimited by an edge, and formed by a plurality of individual dental alveoli (2) the shape of which is adapted to that of the teeth of the maxilla or mandible of the individual,
the correction device further comprising a base (10), **characterised in that** said base (10) forms the edge of the cavity of the dental alveoli (2), and the dental alveoli (2) have a hardness lower than the base (10).

2. Device according to the preceding claim, further comprising at least one extension element (3) associated with a dental alveolus (2) and extending from the base (10) of the device in a determined orientation,
the extension element (3) being adapted to apply a determined force to at least one surface of the tooth adapted to be received in the dental alveolus (2).

3. Device according to claim 2, wherein an extension element has a shape selected from a tongue shape (3I), a bow shape (3A), a T shape (3T) or an L shape (3L).

4. Device according to the preceding claim, wherein the extension element (3) has an L (3L), T (3T) or tongue (3I) shape, and wherein a force angle (aF) formed between the extension element and an axis parallel to a height (h) of a vertical wall (Pv) of the dental alveolus with which the extension element (3) is associated is determined according to a level of force to be applied on the vertical surface of the tooth when wearing the correction device.

5. Device according to any one of claims 2 to 4, wherein the extension element (3) is formed in the same material as the base (10).

6. Device according to any one of the preceding claims, wherein an interalveolar area (21) of the gutter separating two adjacent dental alveoli (2) has a hardness less than a hardness of the remaining area forming these two dental alveoli (2).

7. Device according to any one of the preceding claims, wherein the base (10) is formed in a shape memory material.

8. Device according to any one of the preceding claims, wherein the dental alveoli (2) are formed in a first material and the base (10) is formed in a second material, the first material forming the dental alveoli (2) having a hardness lower than the second material forming the base (10).

9. Device according to any one of claims 1 to 7, wherein the dental alveoli (2) and the base (10) are formed in the same material, and the dental alveoli (2) have perforations making it possible to reduce their hardness relative to the hardness of the base (10).

10. Device according to the preceding claim, wherein the base (10) also comprises perforations, the base (10) having a density of perforations lower than the density of perforations provided in the dental alveoli (2).

11. Method for manufacturing a correction device for correcting the positioning of the teeth of the maxilla or mandible of an individual, the method comprising:
obtaining an initial position and a position to be reached of the teeth of the maxilla or mandible of an individual;
determining a level of force and a direction of the force to be applied to at least one tooth of the individual to correct the positioning of the teeth from the initial position to the position to be reached;
computer-modelling a correction device (1) according to any one of the preceding correction-device claims; and
manufacturing this correction device (1).

12. Method according to the preceding claim, when the modelled correction device is a correction device (1) according to any one of claims 2 to 5, wherein the method further comprises, for a specific tooth of the individual:
determining a number of extension members (3) to be applied to the specific tooth;
determining an orientation of each extension element on the base (10) of the correction device (1) with respect to a vertical surface (Pv) of the dental alveolus (2) adapted to receive the specific tooth according to a level of force to be applied and a direction of the force to be applied on the specific tooth.

13. Method according to either one of claims 11 or 12 when the modelled correction device (1) is a correction device (1) according to either one of claims 3 or 4, further comprising, for at least one tooth specific to the individual, determining a shape of an extension element (3) to be applied to the specific tooth according to a movement to be applied to this tooth.
